# EUROPEAN PATENT APPLICATION

(11) **EP 2 012 450 A2**
(43) Date of publication of application: **07.01.2009**
(21) Application number: 08154895.0
(22) Date of filing: 21.04.2008
(51) Int. Cl.: H04H 60/16

(54) **Method for restricting viewing access to broadcast program and broadcast receiving apparatus using the same**

(30) Priority: 06.07.2007 KR 20070068224
(71) Applicant: Samsung Electronics Co., Ltd., Suwon-si, Gyeonggi-do 442-742 (KR)
(72) Inventor: Han, Kum-yon, Yeongtong-dong, Yeongtong-gu, Gyeonggi-do, Suwon-si (KR)
(74) Representative: Waddington, Richard

(57) **Abstract**

A method for restricting viewing access to a broadcast program, and a broadcast receiving apparatus using the same are provided. The method for restricting viewing access to a broadcast program includes a process of restricting viewing access to a broadcast program based on viewing restriction information set by a user. The broadcast receiving apparatus restricts viewing access to the broadcast program selected by the user through an external apparatus connected with a broadcast receiving apparatus, such that the user can set viewing restriction of broadcast program from a location which is remote from the broadcast receiving apparatus.

## Description

### BACKGROUND OF THE INVENTION

### 1. Field of the Invention

Apparatuses and methods consistent with the present invention relate to providing a broadcast view restriction, and more particularly, to a method for restricting viewing access to a broadcast program selected by a user, and a broadcast receiving apparatus using the same.

### 2. Description of the Related Art

A television (TV) is one of the most general broadcast receiving apparatuses. Newly developed TVs provide many additional functions in addition to its basic function.

Parental locks are one of the additional functions provided by the TV. Parents can prevent their children from watching broadcast programs which might be detrimental to them by using the parental lock when they are not at home to guide their children.

A user has to set options related to the parental lock by using a remote control to prevent access to the harmful broadcast programs. However, because parental lock is not executed without setting of the parental options, the function would be useless if parents cannot find the time to or forget to set the options.

### SUMMARY OF THE INVENTION

Exemplary embodiments of the present invention address at least the above problems and/or disadvantages and other disadvantages not described above. Also, the present invention is not required to overcome the disadvantages described above, and an exemplary embodiment of the present invention may not overcome any of the problems described above.

The present invention provides a method for restricting viewing access to a broadcast program selected by a user by using an external apparatus connected with a broadcast receiving apparatus, and a broadcast receiving apparatus using the same.

According to the present invention there is provided an apparatus and method as set forth in the appended claims. Other features of the invention will be apparent from the dependent claims, and the description which follows.

According to an aspect of the present invention, there is provided a method for restricting viewing access to a broadcast program of a broadcast receiving apparatus, the method comprising receiving viewing restriction information set by a user from an external apparatus; and restricting viewing access to a broadcast program based on the viewing restriction information.

The method may further comprise transmitting broadcast information to the external apparatus, wherein the viewing restriction information comprises information about the broadcast program selected from the external apparatus based on the broadcast information.

The broadcast information may be received from one of a broadcast provider and a broadcast information provider, and may be stored.

The broadcast information may be received through a media transmitting broadcast information, or through a media different from the media transmitting broadcast information, and may be stored.

Receiving of the viewing restriction information may comprise receiving the viewing restriction information from the external apparatus through one of the Internet, public switched telephone network (PSTN), local area network (LAN), personal area network (PAN), and wireless network.

The external apparatus may be one of a personal computer (PC), a mobile phone, and a network connection apparatus.

The broadcast receiving apparatus may be connected with the external apparatus via the Internet, and the broadcast receiving apparatus may function as a web server corresponding to the external apparatus.

According to another aspect of the present invention, there is provided a broadcast receiving apparatus, comprising a communication interface which is connected with an external apparatus; and a controller which restricts viewing access to a broadcast program based on the viewing restriction information, if the viewing restriction information set by a user is received from the external apparatus through the communication interface.

The controller may transmit the broadcast information to the external apparatus through the communication interface, and wherein the viewing restriction information may comprise information about the broadcast program selected from the external apparatus based on the broadcast information.

The apparatus may further comprise a storage unit which stores broadcast information received from one of a broadcast provider and a broadcast information provider, wherein the controller transmits the broadcast information stored at the storage unit to the external apparatus through the communication interface.

The broadcast information may be received through a media transmitting broadcast information or through a media different from the media transmitting broadcast, information, and may be stored.

The communication interface may be connected with the external apparatus through one of the Internet, a PSTN, an LAN, a PAN, and a wireless network.

The external apparatus may be one of a PC, a mobile phone, and a network connection apparatus.

The broadcast receiving apparatus may be connected with the external apparatus via the Internet, and the broadcast receiving apparatus may function as a web server corresponding to the external apparatus.

According to another aspect of the present invention, there is provided a method for restricting viewing access to a broadcast program of a broadcast receiving apparatus, the method comprising receiving broadcast information from a broadcast receiving apparatus; and transmitting viewing restriction information set by a user to the broadcast receiving apparatus based on the broadcast information.

The broadcast information may be received from one of a broadcast provider and a broadcast information provider, and may be stored.

Receiving the broadcast information may comprise receiving the broadcast information from the broadcast receiving apparatus through one of the Internet, a PSTN, an LAN, a PAN, and a wireless network, and the transmitting of the viewing restriction information may comprise transmitting the viewing restriction information to the broadcast receiving apparatus through one of the networks.

According to another aspect of the present invention, there is provided a terminal, comprising a communication interface which is connected with a broadcast receiving apparatus for communication; and a processor which receives broadcast information from the broadcast receiving apparatus through the communication interface, and transmits viewing restriction information set by a user to the broadcast receiving apparatus through the communication interface based on the broadcast information.

The broadcast information may be received from one of a broadcast provider and a broadcast information provider.

The communication interface may be connected with the broadcast receiving apparatus through one of the Internet, a PSTN, an LAN, a PAN, and a wireless network for communication.

According to another aspect of the present invention, there is provided a method for restricting viewing access to a broadcast receiving program of a broadcast receiving apparatus, the method comprising transmitting information about a currently viewed broadcast program to an external apparatus; and restricting viewing access to the broadcast program, if a command is received from the external apparatus to restrict viewing access.

According to another aspect of the present invention, there is provided a broadcast receiving apparatus, comprising a communication interface which is connected with an external apparatus for communication; and a controller which transmits information about a currently viewed broadcast program to the external apparatus through the communication interface, and which restricts viewing access to the broadcast program, if a command is received from the external apparatus through the communication interface to restrict viewing access.

According to another aspect of the present invention, there is provided a method for restricting viewing access to a broadcast program of a broadcast receiving apparatus, the method comprising receiving information about a currently viewed broadcast program from the broadcast receiving apparatus, and transmitting to the broadcast receiving apparatus a command to restrict viewing access of the broadcast program.

According to another aspect of the present invention, there is provided a terminal comprising a communication interface which is connected with a broadcast receiving apparatus; and a processor which receives information about a currently viewed broadcast program from the broadcast receiving apparatus through the communication interface, and transmits a command to restrict viewing access of a broadcast program to the broadcast receiving apparatus thorough the communication interface.

### BRIEF DESCRIPTION OF THE DRAWINGS

The above aspects of the present invention will be more apparent by describing certain exemplary embodiments of the present invention with reference to the accompanying drawings, in which:

FIG. 1 is a view illustrating a parental system applicable to an exemplary embodiment of the present invention;

FIG. 2 is a block diagram illustrating a digital television of FIG. 1;

FIG. 3 is a block diagram illustrating a personal computer (PC) of FIG. 1;

FIG. 4 is a view illustrating a method for restricting viewing access to a broadcast program according to an exemplary embodiment of the present invention;

FIG. 5 is a view illustrating a method for restricting viewing access to a broadcast program according to another exemplary embodiment of the present invention;

FIG. 6 is a block diagram illustrating a broadcast receiving apparatus according to yet another exemplary embodiment of the present invention;

FIG. 7 is a flowchart illustrating a method for restricting viewing access to a broadcast program according to yet another exemplary embodiment of the present invention;

FIG. 8 is a block diagram illustrating a terminal according to the yet another exemplary embodiment of the present invention;

FIG. 9 is a flowchart illustrating a method for restricting viewing access to a broadcast program according to yet another exemplary embodiment of the present invention;

FIG. 10 is a block diagram illustrating a terminal according to the yet another exemplary embodiment of the present invention;

FIG. 11 is a flowchart illustrating a method for restricting viewing access to a broadcast program according to yet another exemplary embodiment of the present invention;

FIG. 12 is a block diagram illustrating a terminal according to the yet another exemplary embodiment of the present invention; and

FIG. 13 is a flowchart illustrating a method for restricting viewing access to a broadcast program according to yet another exemplary embodiment of the present invention.

### DETAILED DESCRIPTION OF EXEMPLARY EMBODIMENTS OF THE INVENTION

Certain exemplary embodiments of the present invention will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Thus, it is apparent that the present invention can be carried out without those specifically defined matters. Also, well-known functions or constructions are not described in detail since they would obscure the invention with unnecessary detail.

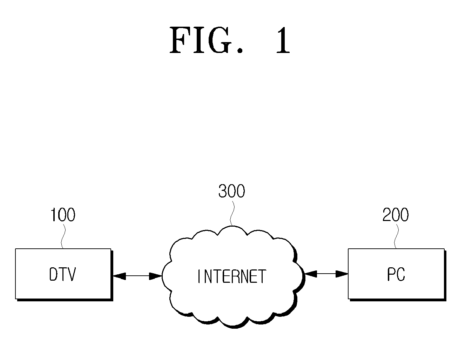

FIG. 1 is a view illustrating a parental lock system applicable to an exemplary embodiment of the present invention. Referring to FIG. 1, a parental lock system may include a digital television (DTV) 100, a PC 200, and the Internet 300. The DVT 100 is connected with the PC 200 through the Internet 300 for communication.

The DTV 100 is a broadcast receiving apparatus which receives a broadcast program, and provides a user with the broadcast program. The DTV 100 provides a parental lock to prevent access to a broadcast program. The parental lock may not display a predetermined broadcast program on a screen. However, if the broadcast program is displayed, it may be displayed in a scrambled manner.

The PC 200 is connected with the DTV 100 through the Internet 300. The PC 200 may be positioned near the DTV 100 or at a remote distance. That is, the DTV 100 may be positioned at a user's house or the user's company.

The PC 200 receives electronic program guide (EPG) information from the DTV 100 via the Internet 300. A user may select a broadcast program for setting a parental lock using the PC 200 by referring to EPG information. When the PC 200 transmits information about the broadcast program selected by the user to the DTV 100, the DTV restricts viewing access to the broadcast program.

The PC 200 receives viewing information from the DTV 100 through the Internet 300. The viewing information may comprise a broadcast program being currently broadcast on the DTV 100. The user may send a command to restrict viewing access to the broadcast program being currently broadcast on the DTV 100 using the PC 200. If the PC 200 transmits a parental lock command to the DTV 100, the DTV 100 restricts viewing access to the currently viewed broadcast program.

As the DTV 100 has to provide the PC 200 connected through the Internet 300 with broadcast information and viewing information, the DTV 100 additionally needs a web server function. On the other hand, as the PC 200 has to request the DTV 100 connected through the Internet 300 for the broadcast information and viewing information using a web page, the PC 200 additionally has a web client function.

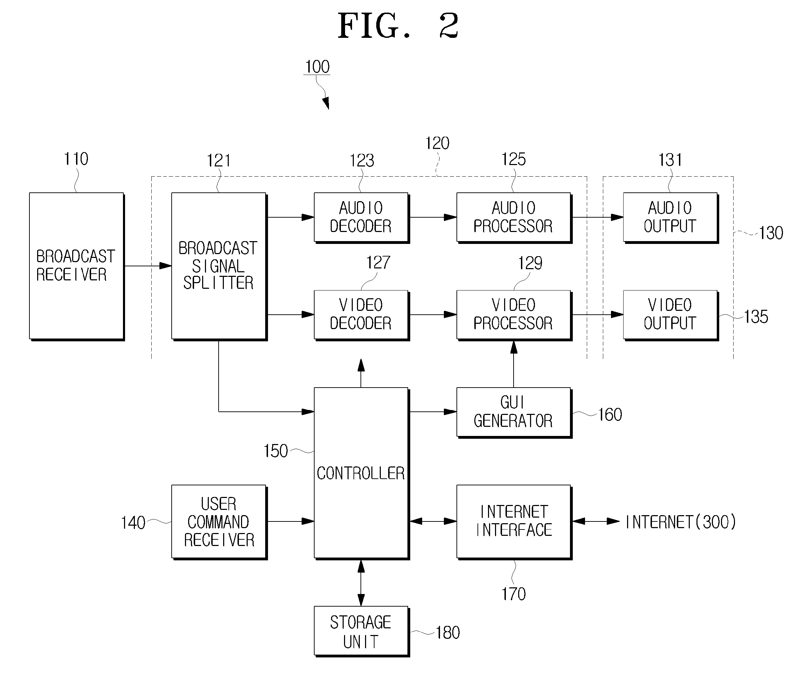

The DTV 100 of FIG. 1 will be explained in detail with reference to FIG. 2, a block diagram of the DTV 100 of FIG. 1.

Referring to FIG. 2, the DTV 100 may include a broadcast receiver 110, a broadcast processor 120, a broadcast output 130, a user command receiver 140, a controller 150, a graphical user interface (GUI) generator 160, the Internet interface 170, and a storage unit 180.

The broadcast receiver 110 tunes to a broadcast received wirelessly, and demodulates the tuned broadcast.

The broadcast processor 120 processes a broadcast signal output from the broadcast receiver 110. The broadcast processor 120 may include a broadcast signal splitter 121, an audio decoder 123, an audio processor 125, a video decoder 127, and a video processor 129.

The broadcast signal splitter 121 splits a broadcast signal output from the broadcast receiver 110 into an audio signal, a video signal, and associated data, and outputs the resultant signals. The video signal and audio signal split from the broadcast signal are input to the audio decoder 123, and the video decoder 127, respectively to provide a digital broadcast program.

The associated data split from the broadcast signal is input to the controller 150. The associated data includes EPG information. The EPG information includes information about the programs to be broadcast such as a program title, a broadcast duration, a genre, a plot, or characters.

The audio decoder 123 decodes the audio signal output from the broadcast signal splitter 121, and the decompressed audio signal is output from the audio decoder 123.

The audio processor 125 converts the audio signal decoded by the audio decoder 123 into an audio signal in a format suitable for output through a speaker of the DTV 100.

The video decoder 127 decodes the video signal output from the broadcast signal splitter 121, and the decompressed video signal is output from the video decoder 127.

The video processor 129 converts the video signal decoded by the video decoder 127 into a video signal in a format suitable for output through a display of the DTV 100. The video processor 129 performs a color signal processing of the decoded video signal or scales the decoded video signal.

The GUI generator 160 generates a GUI to be displayed on the display. The GUI generated at the GUI generator 160 is input to the video processor 129, and combined with a video to be displayed on the display. This is referred to as on screen display (OSD) processing.

The broadcast output 130 outputs a video and audio corresponding to the video signal and audio signal output from the broadcast processor 120, and provides a user with the video and audio. The broadcast output 130 may include an audio output 131, and a video output 135 which execute the above function.

The audio output 131 outputs the audio signal output from the audio processor 125 via a speaker, or an external device such as an external TV connected through an external output terminal.

The video output 135 outputs the video signal output from the video processor 129 through a display, or an external display such as an external TV connected through an external output terminal.

The Internet interface 170 is connected between the PC 200 and the Internet 300 to enable communication.

The user command receiver 140 transmits a user command received from a remote control to the controller 150. The controller 150 controls overall operations of the DTV 100 according to the user command received from the user command receiver 140.

The controller 150 stores in the storage unit 180 the EPG information which is included in the associated data split from the broadcast signal at the broadcast splitter 121. If the controller 150 is connected with the PC 200 through the Internet interface 170, the controller 150 transmits the EPG information stored in the storage unit 170 to the PC 200 through the Internet interface 170.

If the controller receives information from the PC 200 through the Internet interface 170 about a broadcast program for which a parental lock should be set, the controller 150 controls at least one of the broadcast receiver 110, the broadcast processor 120, and the broadcast output 130 to restrict viewing access to the broadcast program.

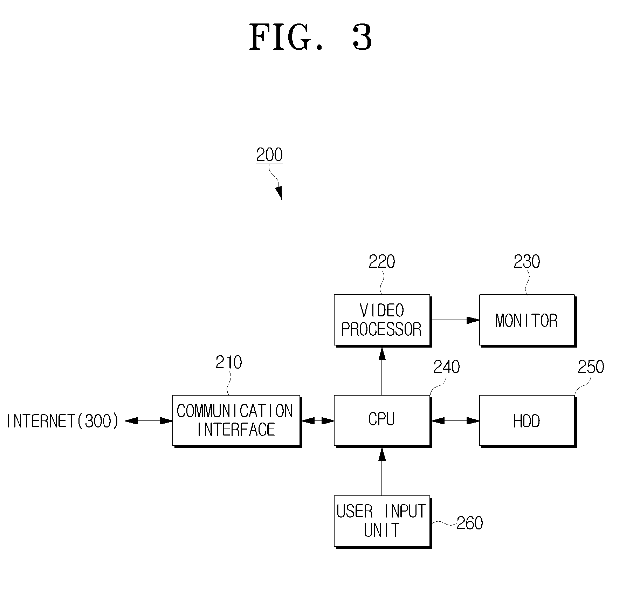

Hereinbelow, the PC 200 of FIG. 1 will be explained in detail with reference to FIG. 3, a block diagram of the PC 200 of FIG. 1.

Referring to FIG. 3, the PC 200 may include a communication interface 210, a video processor 220, a monitor 230, a central processing unit (CPU) 240, a hard disc drive (HDD) 250, and a user input unit 260.

The communication interface 210 is connected between the DTV 100 and the Internet 300 to enable communication.

The video processor 220 converts a video to be displayed on a screen into a video signal format that may be processed at the monitor 230. The monitor 230 displays a video corresponding to the video signal received from the video processor 220.

The HDD 250 stores a program and data to operate the PC 200. The CPU 240 controls the overall operations of the PC 200 according to a user command input through the user input unit 260.

The CPU 240 processes the EPG information received from the DTV 100 through the communication interface 210, and transmits the EPG information to the video processor 220 to display the EPG information on the monitor 230.

A user can select a broadcast program to set a parental lock using the user input unit 260 while referring the EPG information on the monitor 230. The CPU 240 transmits the information of the broadcast program selected by the user to the DTV 100 through the communication interface 210. The DTV 100 restricts viewing access to the broadcast program selected by the user.

The CPU 240 processes the viewing information received from the DTV 100 through the communication interface 210, and transmits the processed information to the video processor 220 to display the viewing information on the monitor 230. Accordingly, the user can find out about the type of broadcast program he is currently watching on the DTV 100 by referring to the viewing information on the monitor 230.

The user can input a command for restricting viewing access to the currently viewed broadcast program using the user input unit 260. If the command for setting a parental lock is input, the CPU 240 transmits the command to set the parental lock to the DTV 100 through the communication interface 210. The DTV 100 restricts viewing access to the currently viewed broadcast program.

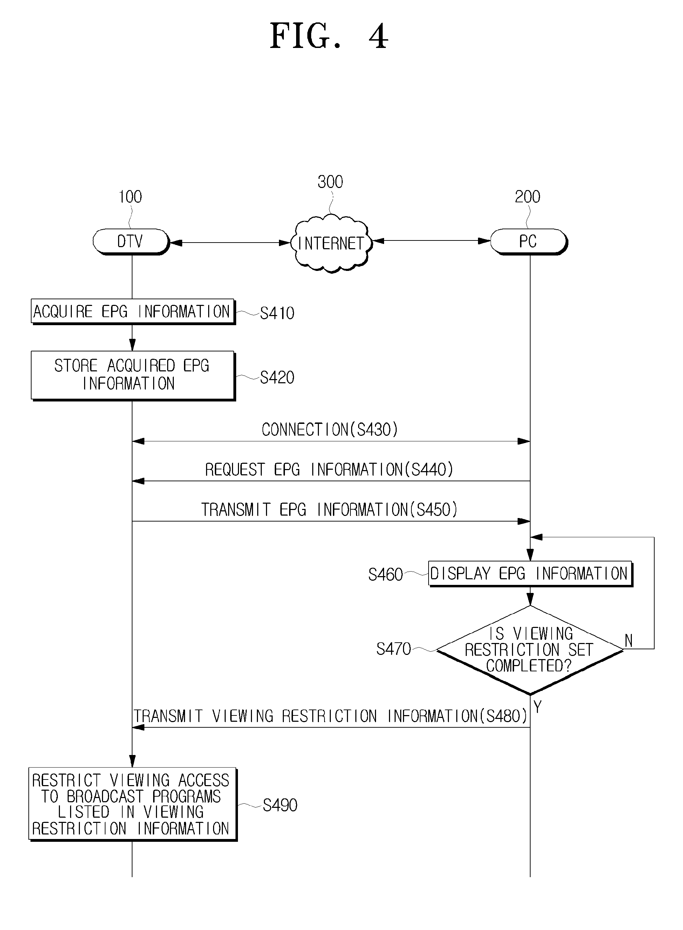

Hereinbelow, the process that the DTV 100 uses to restrict viewing access to a broadcast program according to the user selecting a broadcast program for implementing a parental lock using the PC 200, will be explained in detail with reference to FIG. 4. FIG. 4 is a view illustrating a method for restricting viewing access to a broadcast program according to an exemplary embodiment of the present invention.

Referring to FIG. 4, the controller 150 provided in the DTV 100 acquires EPG information (S410). The controller 150 acquires EPG information by extracting the EPG information from the associated data split from the broadcast signal.

The controller 150 stores the EPG information acquired in the operation S410 in the storage unit 180 (S420).

If the PC 200 is connected with the DTV 100 via the Internet 300, the controller 150 of the DTV 100 is connected with the CPU 240 of the PC 200 for communication (S430). Herein, the communication applies hypertext transfer protocol (HTTP). This is because the DTV 100 is connected with the PC 200 via the Internet 300.

If the CPU 240 of the PC 200 requests the EPG information from the DTV 100 though the communication interface 210 (S440), the controller 150 of the DTV 100 transmits the EPG information stored at the storage unit 180 to the PC 200 through the communication interface 170 (S450).

The CPU 240 of the PC 200 displays the EPG information received from the DTV 100 through the communication interface 210 (S460). The CPU 240 processes the received EPG information, and transfers the processed EPG information to the video processor 220 and displays the EPG information on the monitor 230.

The user can refer to the EPG information on the monitor 230, and set the parental lock using the user input 160. That is, the user can set the parental lock by selecting one of the broadcast programs listed in the EPG information.

When the user completes setting the viewing restriction (S470-Y), the CPU 240 of the PC 200 transmits the viewing restriction information to the DTV 100 through the communication interface 210 (S480). The viewing restriction information transmitted from the PC 200 to the DTV 100 includes information about broadcast programs selected by the user.

The controller 150 provided in the DTV 100 controls one of the broadcast receiver 110, the broadcast processor 120, and the broadcast output 130 to restrict viewing access to the broadcast programs listed in the viewing information received from the PC 200 through the communication interface 170 (S490).

Specifically, the controller 150 may control, □) the broadcast receiver 110 to restrict reception of a viewing restricted broadcast program, □) the broadcast processor 120 not to process the signal if the viewing restricted broadcast program is received from the broadcast receiver 110, or □) the broadcast output 130 not to output the signal if the viewing restricted broadcast program is received through the broadcast receiver 110 and processed at the broadcast processor 120.

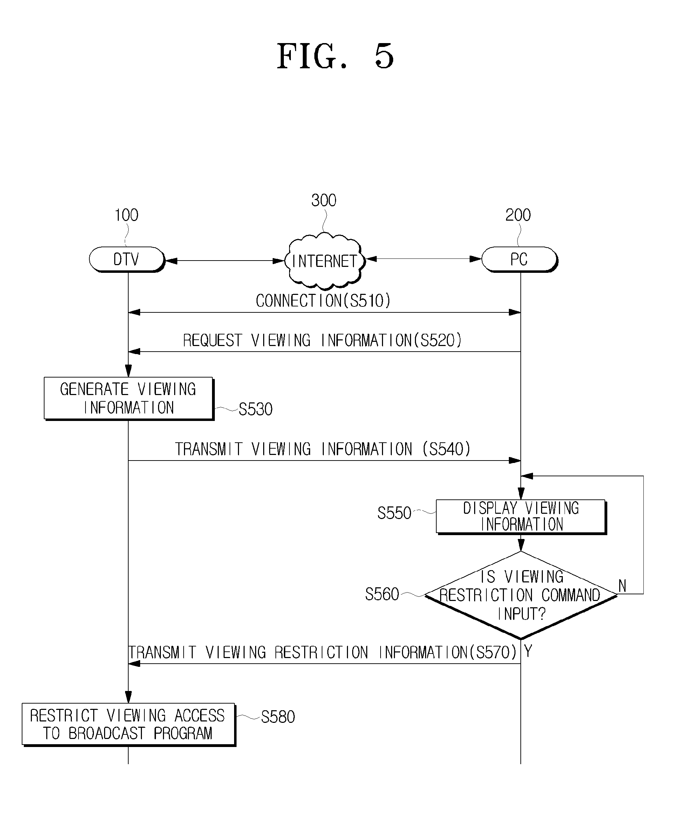

The process of setting the parental lock system illustrated in FIG. 1 will be explained with reference to FIG. 5, referring to a case where a user checks the broadcast program currently being broadcast on the DTV 100 using the PC 200, and sets the parental lock. FIG. 5 is a view illustrating a method for restricting viewing access to broadcast program.

Referring to FIG. 5, if the PC 200 is connected with the DTV 100 via the Internet 300, the controller 150 of the DTV 100 is connected with the CPU 240 of the PC 200 for communication (S510). Herein, the communication applies HTTP. This is because the DTV 100 is connected with the PC 200 via the Internet 300.

If the CPU 240 of the PC 200 requests viewing information from the DTV 100 through the communication interface 210 (S520), the controller 150 of the DTV 100 generates the viewing information (S530), and transmits the generated viewing information to the PC 200 through the interface 170 (S540).

The viewing information pertains to broadcast programs currently broadcast on the DTV 100, as explained above. In operation S530, the controller 150 may acquire a program title by referring to a channel number currently broadcast through the broadcast receiver 110, current time, and EPG information stored in the storage unit 180, and generate viewing information using the program title.

The CPU 240 of the PC 200 displays viewing information received from the DTV 100 through the communication interface 210 (S550). The CPU 240 processes the received viewing information, and transmits the processed information to the video processor 220 to display the viewing information on the monitor 230.

The user can refer to the viewing information displayed on the monitor 230, and also input the viewing restriction command using the user input 160.

If the user inputs the viewing restriction command (S560-Y), the CPU 240 of the PC 200 transmits the viewing restriction command to the DTV 100 through the communication interface 210 (S570).

The controller 150 provided in the DTV 100 controls one of the broadcast receiver 110, the broadcast processor 120, and the broadcast output 130 to restrict viewing access to the broadcast programs currently being broadcast (S580).

The process for the DTV 100 to restrict viewing access to the broadcast program when the user selects a broadcast program for parental lock using the PC 200, and the process for the DTV 100 to restrict viewing access to the broadcast program when the user checks a broadcast program currently being broadcast, and commands for setting the parental lock using the PC 200, are described according to the exemplary embodiments of the present invention.

Because the DTV 100 is connected with the PC 200 via the Internet 300 for communication in the exemplary embodiments of the present invention, it is embodied that EPG information, viewing restriction information, and viewing restriction command are transmitted through the Internet 300. However, it is merely an exemplary embodiment of the present invention. Alternatively, the DTV 100 may be connected with the PC 200 via other forms of networks instead of the Internet 300. The EPG information, the viewing restriction information, the viewing information, and the viewing restriction command may be transmitted through these networks. The other forms of networks may be a LAN, a PAN, and a PSTN. The network may be both wired and wireless.

While only one broadcast program is selected for parental lock in the first exemplary embodiment of the present invention, it is merely an exemplary embodiment of the present invention. Selection of a plurality of broadcast programs for parental lock may be applicable to the present invention.

While a user may select a broadcast program to restrict viewing, and the information about broadcast program selected by the user is listed in the viewing restriction information, it is merely an exemplary embodiment of the present invention. The present invention is applicable when the rating, time, or other items of the restricted broadcast is set and the information set by the user is listed in the viewing restriction information.

The EPG information is presented as broadcast information in the first exemplary embodiment of the present invention. Herein, the EPG information is listed in the associated information included in the broadcast signal. That is, the EPG information is received through media transmitting broadcast.

However, the EPG information is not necessarily received through the broadcast in the present invention. The EPG information may be received separately from the broadcast through media transmitting broadcast. The media transmitting broadcast may be public, cable, network, Internet, or satellite. The media is not limited thereto, and other media are possible.

Even when the EPG information is received through different media from the media transmitting broadcast, the technical concept of the present invention equally applies. For example, the concept of the present invention is applicable to when the broadcast is transmitted through satellite, and the EPG information is transmitted through cable, network, or the Internet.

While the EPG information is explained as information transmitted from the DTV 100 to the PC 200 in the first exemplary embodiment, it is merely an exemplary embodiment of the present invention. Other broadcast information may be used instead of the EPG information.

The broadcast information transmitted from the DTV 100 to the PC 200 may be provided to the DTV 100 through a broadcast provider, a broadcast information provider, or other providers.

While the DTV 100 transmits the EPG information received from an external source to the PC 200 without altering the EPG information in the first exemplary embodiment of the present invention, it is merely an exemplary embodiment of the present invention. The DTV 100 may edit the EPG information received from the external source according to a command from the user, store the edited EPG information, and transmit the EPG information to the PC 200. For example, the EPG information received at the DTV 100 from the external source is, for example, information about the broadcast program provided from channel 1-100. But the EPG information edited according to the user's command may be information about the broadcast program provided from channels 1-10, and 31-50.

While the program title is presented as broadcast information in the second exemplary embodiment of the present invention, other information may be presented as the broadcast information since it is merely an exemplary embodiment of the present invention. Accordingly, the broadcast information may alternatively be a channel number, a broadcast rating, a genre, or a plot of a currently viewing broadcast. Also, image which is captured from the screen of a currently broadcast program, or moving image for a predetermined duration of a currently broadcast program is applicable as the broadcast information.

While the DTV 100 is used to restrict viewing access to broadcast programs in the exemplary embodiments of the present invention, other broadcast receiving apparatuses may alternatively be used. The broadcast receiving apparatuses may be a settop box (STB), a digital multimedia broadcasting (DMB) receiving apparatus portable apparatuses which have broadcast receiving functions such as mobile phones, navigation apparatuses, and personal multimedia players (PMP).

While the PC 200 is described as an apparatus to set or input a viewing restriction command, it is merely an exemplary embodiment of the present invention. Alternatively, other terminals such as mobile phones or network terminals may be used instead of the PC 200. The mobile phone has to be connected with the Internet via a base station. The network terminal is connectable with a network either wired or wirelessly, and in the latter's case, the network terminal is connectable with the network via an access point (AP).

The user of DTV 100 may be the same user as PC 200. However, even if the users are different, the technical concept of the present invention equally applies.

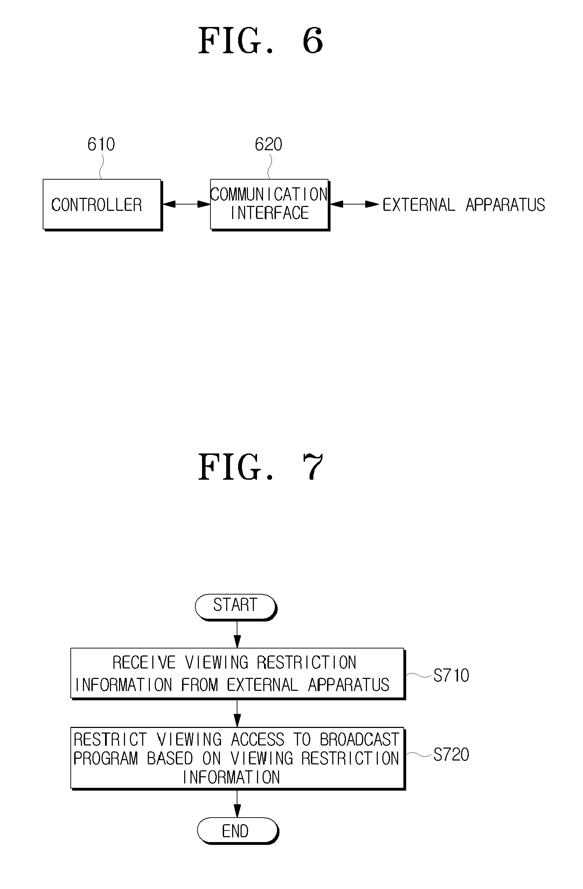

Yet another exemplary embodiment of the present invention will be explained in detail with reference to FIGs. 6 and 7.

Referring to FIG. 6, a broadcast receiving apparatus according to yet another exemplary embodiment of the present invention may comprise a controller 610, and a communication interface 620. The communication interface 620 is connected with an external apparatus for communication. If the controller 610 receives viewing restriction information from the external apparatus through the communication interface 620, the controller 610 restricts viewing access to broadcast programs listed in the viewing restriction information.

According to a method for restricting viewing access to broadcast programs of FIG. 7, the broadcast receiving apparatus receives viewing restriction information from the external apparatus (S710). The broadcast receiving apparatus restricts viewing access to broadcast programs listed in the viewing restriction information (S720).

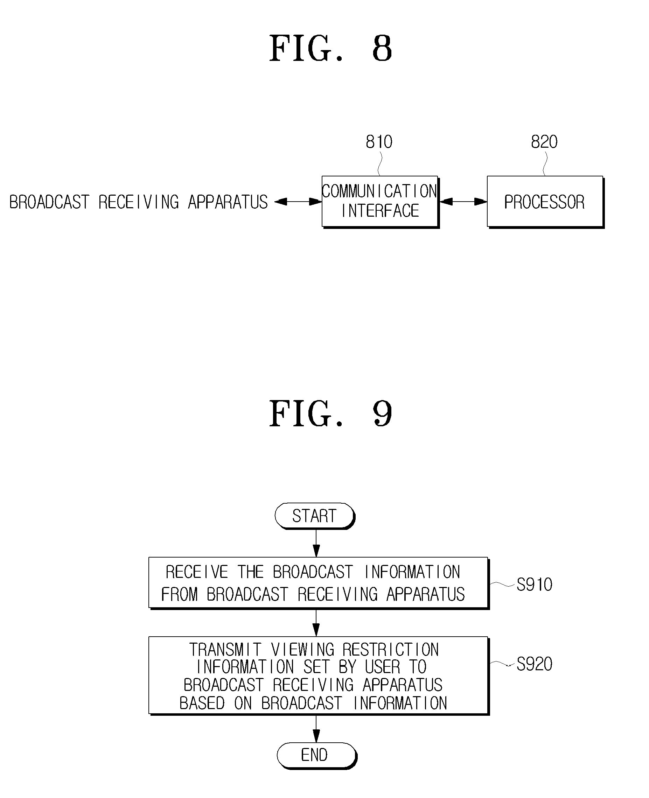

Yet another exemplary embodiment of the present invention will be explained in detail with reference to FIGs. 8 and 9.

Referring to FIG. 8, a terminal according to the yet another exemplary embodiment of the present invention may comprise a communication interface 810, and a processor 820. The communication interface 810 is connected with a broadcast receiving apparatus for communication. The processor 820 receives broadcast information from the broadcast receiving apparatus through the communication interface 810. The processor 820 transmits viewing restriction information including selected broadcast program information to the broadcast receiving apparatus through the communication interface 810 so as to restrict viewing access to broadcast programs selected with reference to broadcast information at the broadcast receiving apparatus.

Referring to a method for restricting viewing access to broadcast programs of FIG. 9, the terminal receives the broadcast information from the broadcast receiving apparatus (S910). The terminal transmits viewing restriction information including selected broadcast program information to the broadcast receiving apparatus so that the broadcast receiving apparatus restricts viewing access to the broadcast program selected with reference to broadcast information (S920).

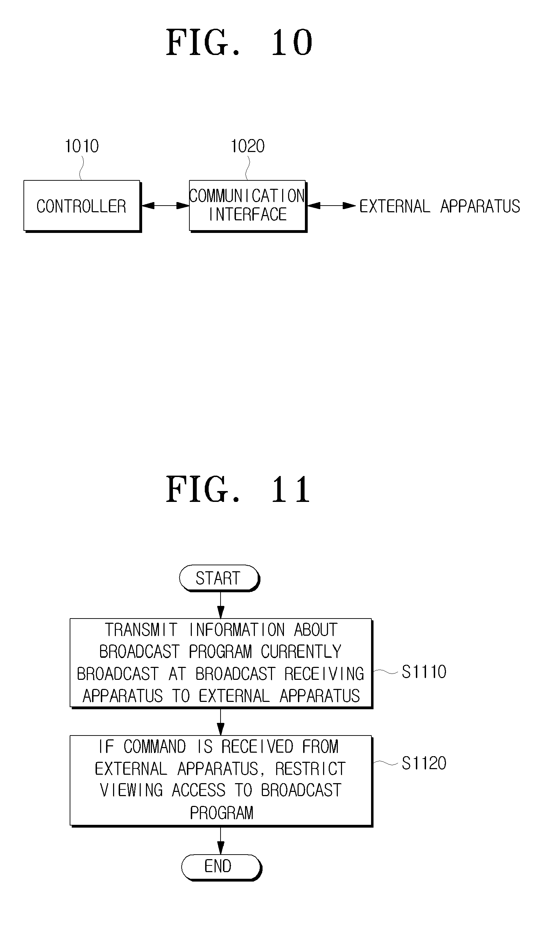

Yet another exemplary embodiment of the present invention will be explained in detail with reference to FIGs. 10 and 11.

Referring to FIG. 10, a broadcast receiving apparatus according to yet another exemplary embodiment of the present invention may comprise a controller 1010 and a communication interface 1020. The communication interface 1020 is connected with an external apparatus for communication. The controller 1010 transmits information about broadcast programs currently being broadcast at the broadcast receiving apparatus, to the external apparatus. According to a command received from the external apparatus through the communication interface 1020, the controller 1010 restricts viewing access to selected broadcast programs.

According to a method for restricting viewing access to broadcast program of FIG. 11, the broadcast receiving apparatus transmits information about broadcast programs currently being broadcast at the broadcast receiving apparatus, to the external apparatus (S1110). If a command is received from the external apparatus to restrict viewing access to selected broadcast programs, the broadcast receiving apparatus restricts viewing access to the selected broadcast programs (S1120).

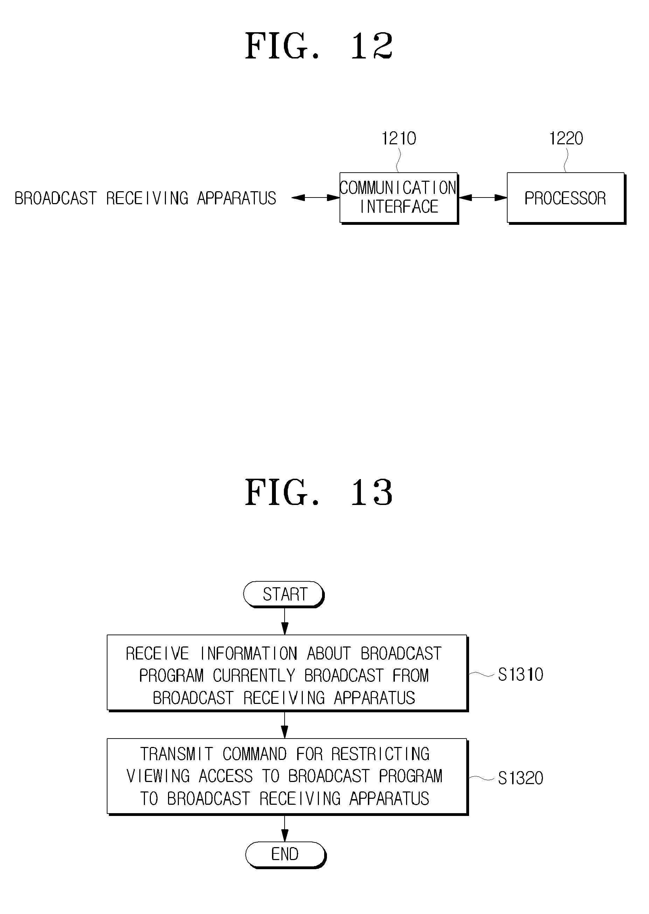

Yet another exemplary embodiment of the present invention will be explained in detail with reference to FIGs. 12 and 13.

Referring to FIG. 12, a terminal according to yet another exemplary embodiment of the present invention may comprise a communication interface 1210 and a processor 1220. The communication interface 1210 is connected with the broadcast receiving apparatus for communication. The processor 1220 receives information about broadcast programs currently being broadcast from the broadcast receiving apparatus through the communication interface 1210. The processor 1220 transmits a command to restrict viewing access to broadcast programs to the broadcast receiving apparatus through the communication interface 1210.

According to a method for restricting viewing access to broadcast programs of FIG. 13, the terminal receives the information about broadcast programs currently being broadcast from the broadcast receiving apparatus (S1310). The terminal transmits a command to restrict viewing access to broadcast programs to the broadcast receiving apparatus (S1320).

In doing so, the viewing restriction is possible at the broadcast receiving apparatus according to a user command input through the terminal.

A broadcast receiving apparatus may restrict viewing access to broadcast programs selected by a user using an external apparatus connected with the broadcast receiving apparatus. The user can even set viewing restrictions in a place where the broadcast receiving apparatus is not provided. It is also possible to check and set viewing restrictions to a broadcast program broadcast at a remote distance from the broadcast receiving apparatus.

The foregoing embodiments are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for restricting viewing access to a broadcast program of a broadcast receiving apparatus, the method comprising:
receiving viewing restriction information from an external apparatus; and
restricting viewing access to the broadcast program based on the viewing restriction information.

2. The method of claim 1, further comprising:
transmitting broadcast information to the external apparatus,
wherein the viewing restriction information comprises information about the broadcast program which is selected from the external apparatus based on the broadcast information.

3. The method of claim 2, wherein the broadcast information is received from one of a broadcast provider and a broadcast information provider.

4. The method of claim 3, wherein the broadcast information is received through a media transmitting broadcast.

5. The method of claim 4, wherein the broadcast information is received through a media which is different from the media transmitting broadcast.

6. The method of any preceding claim, wherein the receiving the viewing restriction information comprises receiving the viewing restriction information from the external apparatus through one of the Internet (300), a public switched telephone network, a local area network, a personal area network, and a wireless network.

7. The method of any preceding claim, wherein the external apparatus is one of a personal computer, a mobile phone, and a network connection apparatus.

8. The method of any preceding claim, wherein the broadcast receiving apparatus is communicably connected with the external apparatus via the Internet (300), and
wherein the broadcast receiving apparatus functions as a web server which corresponds to the external apparatus.

9. A broadcast receiving apparatus comprising:
a communication interface (210) which is communicably connected with an external apparatus; and
a controller (610) which restricts viewing access to a broadcast program based on viewing restriction information, if viewing restriction information is received from the external apparatus through the communication interface (210).

10. The apparatus of claim 9, wherein the controller (610) transmits broadcast information to the external apparatus through the communication interface (210),
wherein the viewing restriction information comprises information about the broadcast program which is selected from the external apparatus based on the broadcast information.

11. The apparatus of claim 9 or claim 10, further comprising:
a storage unit (180) in which broadcast information received from one of a broadcast provider and a broadcast information provider is stored,
wherein the controller (610) transmits the broadcast information stored in the storage unit (180) to the external apparatus through the communication interface (210).

12. The apparatus of claim 11, wherein the broadcast information is received through a media transmitting broadcast, and is stored in the storage unit (180).

13. The apparatus of claim 12, wherein the broadcast information is received through a media which is different from the media transmitting broadcast, and is stored in the storage unit (180).

14. The apparatus of any one of claims 9 to 13, wherein the communication interface (210) is communicably connected with the external apparatus through one of the Internet (300), a public switched telephone network, a local area network, a personal area network, and a wireless network for communication.

15. The apparatus of any one of claims 9 to 14, wherein the external apparatus is one of a personal computer, a mobile phone, and a network connection apparatus.

16. The apparatus of any one of claims 9 to 15, wherein the broadcast receiving apparatus is communicably connected with the external apparatus via the Internet (300), and
wherein the broadcast receiving apparatus functions as a web server which corresponds to the external apparatus.

17. A method for restricting viewing access to a broadcast program of a broadcast receiving apparatus, the method comprising:
receiving broadcast information from a broadcast receiving apparatus; and
transmitting viewing restriction information to the broadcast receiving apparatus based on the broadcast information.

18. The method of claim 17, wherein the broadcast information is received from one of a broadcast provider and a broadcast information provider.

19. The method of claim 17 or claim 18, wherein the receiving the broadcast information comprises receiving the broadcast information from the broadcast receiving apparatus through one of the Internet (300), a public switched telephone network, a local area network, a personal area network, and a wireless network, and the transmitting the viewing restriction information comprises transmitting the viewing restriction information to the broadcast receiving apparatus through one of the Internet (300), the public switched telephone network, the local area network, the personal area network, and the wireless network.

20. A terminal comprising:
a communication interface (210) which is communicably connected with a broadcast receiving apparatus ; and
a processor (220) which receives broadcast information from the broadcast receiving apparatus through the communication interface (210), and transmits viewing restriction information to the broadcast receiving apparatus through the communication interface (210) based on the broadcast information.

21. The terminal of claim 20, wherein the broadcast information is received from one of a broadcast provider and a broadcast information provider.

22. The terminal of claim 20, wherein the communication interface (210) is communicably connected with the broadcast receiving apparatus through one of the Internet (300), a public switched telephone network, a local area network, a personal area network, and a wireless network.

23. A method for restricting viewing access to a broadcast receiving apparatus of a broadcast receiving apparatus, the method comprising:
transmitting information about a currently viewed broadcast program to an external apparatus; and
restricting viewing access to the broadcast program, if a command is received from the external apparatus.
